# FASCICULE DE BREVET EUROPEEN

(11) **EP 0 726 232 B1**
(45) Date de publication et mention de la délivrance du brevet: **24.03.1999**
(21) Numéro de dépôt: 96400212.5
(22) Date de dépôt: 31.01.1996
(51) Int. Cl.: C03C 17/06, B60J 1/00, H05B 3/26

(54) **Vitrage automobile comportant une couche électroconductrice**
Fahrzeugverglasung mit einer elektroleitenden Schicht
Vehicle glazing with an electroconductive layer

(30) Priorité: 07.02.1995 DE 19503892
(43) Date de publication de la demande: 14.08.1996
(73) Titulaire: SAINT-GOBAIN VITRAGE, 92400 Courbevoie (FR)
(72) Inventeur: Sauer, Gerb, D-52224 Stolberg/Venwegen (DE)
(74) Mandataire: Breton, Jean-Claude

(56) Documents cités:
- EP-A- 0 332 898
- EP-A- 0 396 449
- DE-A- 3 708 577
- DE-A- 4 340 907
- CHEMICAL ABSTRACTS, vol. 116, no. 26, 29 Juin 1992 Columbus, Ohio, US; abstract no. 261051q, page 351; XP002010512 & JP-A-00 442 835 (ARAI TOMOO) 13 Février 1992

## Description

L'invention concerne un vitrage comportant une couche électro-conductrice transparente ; celle-ci constitue au moins une partie de l'enceinte formant un espace au sein duquel se trouve une antenne réceptrice ou émettrice de rayonnement micro-onde, et peut être en particulier un vitrage automobile recouvert d'une couche réfléchissant les infrarouges.

Les vitrages, munis d'un fil électro-conducteur de faible impédance, sont employés comme vitrages isolants et/ou comme vitrages électriques chauffants, tant dans le bâtiment que dans l'industrie automobile. En ce qui concerne les automobiles, ce genre de vitrages, combinés avec une carrosserie en métal, constitue une cage de Faraday qui isole l'intérieur du véhicule des champs électro-magnétiques; dans le domaine de la construction, l'utilisation de vitrages, recouverts d'une couche électro-conductrice, permet également d'isoler électriquement des pièces en équipant les autres parois de manière adéquate. Ce genre d'isolation peut également garantir la protection d'installations sensibles comme des consoles de guidages contre les troubles exercés par des émetteurs radio puissants ou des appareils radars.

Une telle isolation électrique, qui peut s'étendre aux vitrages, empêche la transmission du rayonnement électro-magnétique dans le domaine des micro-ondes. Il s'ensuit qu'on ne peut utiliser de téléphone portable dans un véhicule qui serait équipé de ce type de vitrages. Ceci pose des problèmes considérables si l'on envisage l'implantation de systèmes de recherche de positionnement du véhicule, de télécommande, d'identification, de télépéage, ou si l'émetteur ou le récepteur se trouve avec l'antenne à l'intérieur du véhicule.

Le but de cette invention est de pourvoir un vitrage d'une couche électro-conductrice qui, tout en maintenant l'effet d'isolation face au rayonnement électro-magnétique des grandes longueurs d'ondes et l'effet de réflexion des infrarouges, permette aux micro-ondes de passer.

Le procédé, ici décrit, résout le problème de la façon suivante : la couche électro-conductrice contient au moins une fente, dont la longueur est fonction du rayonnement micro-onde ; cette fente permet à une onde électro-magnétique, passant dans le domaine des micro-ondes et absorbée par la couche conductrice, d'être réémise.

Le vitrage automobile décrit dans le brevet EP 0 332 898 B1 est un vitrage électrique chauffant recouvert d'une couche métallique de faible impédance, dans lequel se trouve une fente jouant le rôle d'une antenne pour la réception radio en modulation de fréquence. Dans ce système d'antenne à fente bien connu, la couche électro-conductrice est cependant reliée directement au milieu de la fente, d'une part au conducteur intérieur, d'autre part au conducteur extérieur, d'un câble coaxial qui est relié au récepteur.

Contrairement à cette antenne à fente, déjà utilisée pour un vitrage automobile, celle décrite par cette invention ne prévoit pas de contact direct entre la couche électro-conductrice du vitrage et l'émetteur et/ou le récepteur à l'intérieur du véhicule. Dans ce cas, la réémission de l'énergie des micro-ondes est un simple effet de rayonnement, qui est à son tour reçu par l'antenne de l'appareil récepteur. L'antenne du vitrage produit naturellement cet effet dans les deux directions, c'est-à-dire quel que soit le côté de l'espace isolé électriquement où le récepteur et l'émetteur se trouvent.

Par micro-ondes, on entend des ondes électro-magnétiques d'une longueur inférieure à 20 cm. Par conséquent, la longueur de la fente dans la couche se situe entre 0,2 et 10 cm ; on raccourcira cette longueur en fonction de la constante diélectrique du verre.

On obtient naturellement les meilleurs résultats lorsque la longueur de l'onde, par laquelle l'information est transmise, est fixe, et que l'on porte celle de la fente à une longueur de résonance de Lambda/2, en fonction de la constante diélectrique du verre. En utilisant une fréquence de transmission de 5,8 Ghz par exemple, ce qui représente une longueur d'ondes de Lambda = 52 mm, on obtient une mesure de 18 mm comme longueur idéale de la fente.

Pour bien monter l'invention, on choisira, pour la fente de la couche électro-conductrice, une largeur de 0,01 à 1 mm, de préférence comprise entre 0,1 et 0,5 mm.

La fente peut être produite par des moyens mécaniques, par exemple en utilisant mécaniquement un outil pointu, par microgravure à projection de sable, ou par des moyens thermiques, en particulier en ayant recours à un rayon laser. Avec un faisceau de rayon laser très étroit, on peut obtenir des fentes d'une très petite largeur, bien inférieure à 0,1 mm par exemple, qui sont tellement fines qu'on ne peut les distinguer à l'oeil nu. L'effet que produit la fente ne dépend pas de la largeur de celle-ci.

Si l'on utilise des micro-ondes polarisés linéairement, une ou plusieurs fentes rectilignes dans la couche suffisent pour rendre la couche assez transparente pour le domaine des micro-ondes. Pour obtenir cet effet, l'interruption rectiligne doit être dirigée dans une direction qui doit être perpendiculaire à la direction de polarisation des micro-ondes.

Si cependant l'on devait utiliser des micro-ondes polarisés circulairement pour la transmission, une simple fente rectiligne dans la couche ne suffirait pas. Dans ce cas, afin de pouvoir faire produire tous ses effets à l'invention, il faudra pratiquer des interruptions dans la couche, qui seront formées de deux fentes se croisant de préférence sous un angle de 90 degrés.

En principe, une seule fente de ce type peut suffire à rendre le vitrage suffisamment transparent aux micro-ondes. Dans ce cas, l'étendu de la perméabilité, ou, en d'autres termes, le niveau de l'amortissement provoqué par le vitrage recouvert, dépend de l'endroit où est placée l'antenne émettrice ou réceptrice de celui de la fente interrompant la couche. On peut combattre cette dépendance et augmenter la perméabilité du vitrage recouvert en prévoyant de nombreuses fentes, qui peuvent être, par exemple, réparties sur toute la surface du vitrage. On peut encore améliorer cette perméabilité si chaque fente est éloignée des autres d'un intervalle de Lambda/2 de la longueur d'ondes utilisée, en tenant compte de la constante diélectrique du verre.

Les dessins suivants permettent une meilleure compréhension de l'invention.

Ces croquis montrent :
**Figure 1 :** un pare-brise de voiture présenté sous un angle semi-ouvert et construit d'après le procédé en question,
**Figure 2 :** un agrandissement de la partie II de la figure 1 et,
**Figure 3** : une fente de la couche dans le cas de micro-ondes polarisés circulairement.

Le pare-brise est un vitrage feuilleté constitué d'une feuille de verre extérieure (1) d'une épaisseur de 3 mm par exemple, une couche adhésive thermoplastique (3) du type polyvinyle butyrale d'une épaisseur de 0,76 mm et une feuille de verre (4) qui regarde l'intérieur du véhicule de 2 mm d'épaisseur par exemple. La feuille de verre extérieure (1) est reliée à la feuille intérieure (3) qui lui fait face par une mince couche électro-conductrice transparente (2), qui joue le rôle d'une couche thermoprotectrice grâce à ses propriétés de réflexion des infrarouges. La surface extérieure de la feuille de verre (4), qui regarde vers l'intérieur du véhicule, est entourée d'un cadre (5) recouvert d'une peinture émaillée opaque ; cette dernière apporte notamment une protection de la couche de colle fixant le pare-brise au châssis de la carrosserie contre les rayons ultraviolets, et empêche que l'on ne voit la couche de colle de l'extérieur.

Plusieurs couches se sont avérées indispensables pour former la mince couche électro-conductrice (2) ; on les applique sur la feuille de verre par exemple par un procédé de pulvérisation cathodique assistée par des champs magnétiques ; la couche fonctionnelle est en fait composée d'argent. On connaît le procédé d'assemblage de ces couches. De telles couches minces ont une résistance électrique proportionnellement faible de l'ordre de 3 à 100 Ohm par unité de surface.

La couche mince (2) est munie de multiples fentes verticales (8) qui sont réparties à intervalle régulier sur une partie ou sur toute la surface de la couche (2). Les fentes (8) sont pratiquées dans la couche (2) en évidant linéairement la couche par des moyens thermiques ou mécaniques. L'utilisation du rayon laser est particulièrement pratique pour la fabrication de ces fentes car il permet de produire des fentes extraordinairement minces.

Si la fréquence de travail pour la transmission d'information s'élève à 5,8 Ghz par exemple, comme cela est prévu pour la comptabilisation des péages sur les autoroutes, et que les fentes (8) sont essentiellement prévues pour la transmission de micro-ondes de cette fréquence, les fentes (8) seront portées d'une manière appropriée à une longueur de résonance de Lambda/2 en tenant compte de la constante diélectrique du verre. Pour une fréquence qui correspond à une longueur d'onde Lambda = 52 mm, la longueur L des fentes (8) sera de L = 18 mm.

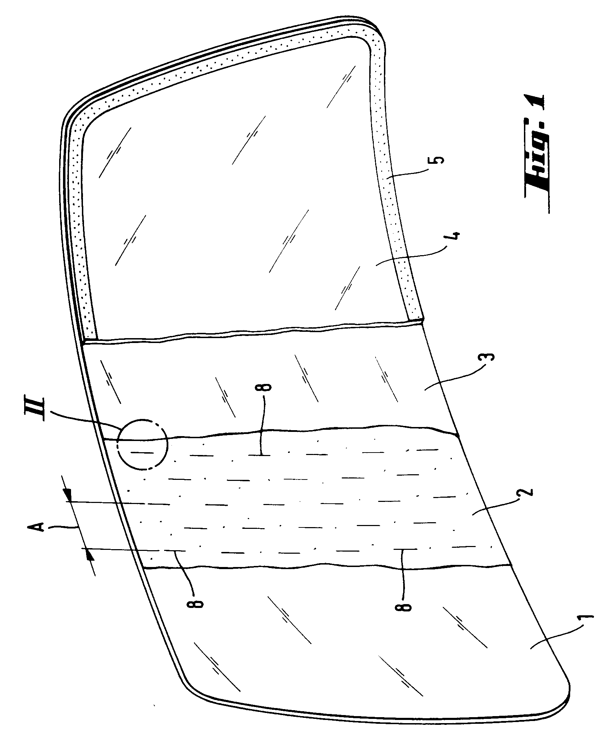

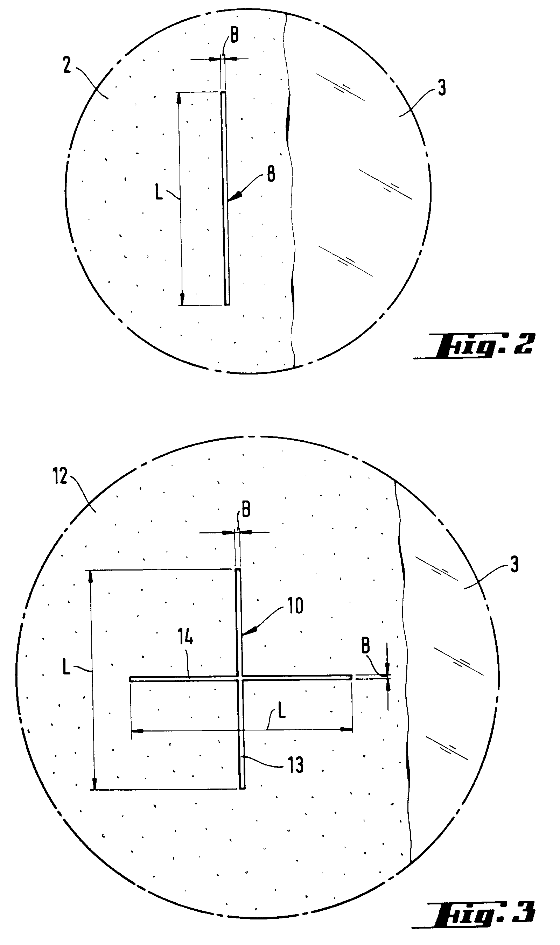

Si l'on compare les mesures d'amortissement d'une émission micro-onde à la fréquence de 5,8 Ghz sur un vitrage feuilleté non recouvert, un vitrage feuilleté recouvert et un vitrage feuilleté muni d'une fente du type de celle de la figure 2, on obtient les valeurs suivantes pour l'amortissement :

| | |
|---|---|
| - vitrage feuilleté non recouvert | 2 à 7 dB |
| - vitrage feuilleté recouvert | 20 à 40 dB |
| - vitrage feuilleté fendu | 6 à 10 dB |

Comparé à l'amortissement d'un vitrage feuilleté non recouvert, celui d'un vitrage feuilleté fendu n'est que très peu augmenté.

Si la transmission d'information se fait par des micro-ondes polarisés circulairement, des fentes sous forme de croix seront prévues en conséquence, comme on le voit sur la figure 2 qui représente un détail d'une fente en forme de croix (10) dans une couche mince (12). La fente en croix (10) est formée de deux fentes droites (13) et (14), qui se croisent en leur milieu à angle droit. La longueur L des deux fentes (13, 14) est de nouveau fonction de la longueur d'onde des micro-ondes utilisés et correspond, en tenant compte de la constante diélectrique du verre, à la valeur Lambda/2 des micro-ondes utilisés.

## Revendications

1. Vitrage recouvert d'une couche transparente électro-conductrice (2, 12) constituant au moins une partie de l'enceinte formant un espace au sein duquel se trouve une antenne émettrice ou réceptrice de rayonnement des micro-ondes, et plus particulièrement, un vitrage automobile réfléchissant les infrarouges, **caractérisé en ce que** dans la couche électro-conductrice (2, 12) se trouve au moins une fente (8, 10) dont la longueur est fonction de la longueur d'onde du rayonnement micro-ondes.

2. Vitrage selon la revendication 1, **caractérisé en ce que** la longueur de la fente (8, 10) est une longueur de résonance de Lambda/2 du rayonnement micro-ondes utilisé, en fonction de la constante diélectrique du verre, c'est-à-dire de 0,2 à 10 cm.

3. Vitrage selon les revendications 1 ou 2, **caractérisé en ce que** la fente (8, 10) possède une largeur de 0,01 à 1 mm, et de préférence de 0,1 à 0,5 mm.

4. Vitrage selon les revendications 1 à 3, **caractérisé en ce que** la fente (10) est composée de deux fentes droites (13, 14) qui se croisent avec un angle de 90 degrés.

5. Vitrage selon l'une des revendications 1 à 4, **caractérisé en ce que** la couche électro-conductrice transparente (2, 12) présente une résistance électrique de 3 à 100 Ohm par unité de surface.

6. Vitrage selon l'une des revendications 1 à 5, **caractérisé en ce que** la couche électro-conductrice (2, 12) comporte de multiples fentes dispersées (8, 10).

7. Vitrage selon la revendication 6, **caractérisé en ce que** les fentes (8, 10) ont toute la même mesure géométrique et sont placées à un intervalle régulier de Lambda/2 du rayonnement des micro-ondes utilisés en fonction de la constante diélectrique du verre.

## Claims

1. Glazing covered by a transparent, electrically conductive coating (2, 12) constituting at least part of the enclosure forming a space within which is located a microwave radiation emitting or receiving antenna and more particularly an infrared-reflecting car glazing, characterized in that the electrically conductive coating (2, 12), where at least one slot (8, 10) is provided, has a length which is a function of the wavelength of the microwave radiation.

2. Glazing according to claim 1, characterized in that the length of the slot (8, 10) is a lambda/2 resonant length of the microwave radiation used, as a function of the dielectric constant of the glass, i.e. 0.2 to 10 cm.

3. Glazing according to claims 1 or 2, characterized in that the slot (8, 10) has a width of 0.01 to 1 mm and preferably 0.1 to 0.5 mm.

4. Glazing according to claims 1 to 3, characterized in that the slot (10) is constituted by two straight slots (13, 14), which intersect at an angle of 90°.

5. Glazing according to one of the claims 1 to 4, characterized in that the transparent, electrically conductive coating (2, 12) has an electrical resistance of 3 to 100 ohm per surface unit.

6. Glazing according to one of the claims 1 to 5, characterized in that the electrically conductive coating (2, 12) has multiple, dispersed slots (8, 10).

7. Glazing according to claim 6, characterized in that all the slots (8, 10) have the same geometrical dimensions and are placed at a regular interval of lambda/2 from the microwave radiation used as a function of the dielectric constant of the glass.

## Patentansprüche

1. Mit einer lichtdurchlässigen, elektrisch leitenden Schicht (2, 12) bedeckte Glasscheibe, die wenigstens einen Teil der Umhüllung eines Raumes bildet, innerhalb dessen eine Sende- und/oder Empfangsantenne für Mikrowellenstrahlung vorgesehen ist, insbesondere Autoglasscheibe mit einer Infrarot reflektierenden Schicht, **dadurch gekennzeichnet**, daß sich in der elektrisch leitenden Schicht (2;12) wenigstens ein Schlitz (8;10) befindet, dessen Länge auf die Wellenlänge der Mikrowellenstrahlung abgestimmt ist.

2. Glasscheibe nach Anspruch 1, **dadurch gekennzeichnet**, daß die Länge des Schlitzes (8;10) eine Resonanzlänge von Lambda/2 der verwendeten Mikrowellenstrahlung unter Berücksichtigung der Dielektrizitätskonstanten des Glases ist, nämlich von 0,2 bis 10 cm.

3. Glasscheibe nach Anspruch 1 oder 2, **dadurch gekennzeichnet**, daß der Schlitz (8;10) eine Breite von 0,01 bis 1 mm, und vorzugsweise 0,1 bis 0,5 mm, besitzt.

4. Glasscheibe nach einem der Ansprüche 1 bis 3, **dadurch gekennzeichnet**, daß der Schlitz (10) aus zwei geraden Schlitzen (13;14) zusammengesetzt ist, die sich unter einem Winkel von 90 Grad kreuzen.

5. Glasscheibe nach einem der Ansprüche 1 bis 4, **dadurch gekennzeichnet**, daß die lichtdurchlässige elektrisch leitende Schicht (2;12) einen elektrischen Widerstand von 3 bis 100 Ohm/Quadrateinheit aufweist.

6. Glasscheibe nach einem der Ansprüche 1 bis 5, **dadurch gekennzeichnet**, daß die elektrisch leitende Schicht (2;12) mehrere verteilte Schlitze (8;10) aufweist.

7. Glasscheibe nach Anspruch 6, **dadurch gekennzeichnet**, daß die Schlitze (8;10) sämtlich gleiche geometrische Abmessungen aufweisen und in einem gegenseitigen Abstand von Lambda/2 der verwendeten Mikrowellenstrahlung unter Berücksichtigung der Dielektrizitätskonstanten des Glases angeordnet sind.
